# EUROPEAN PATENT SPECIFICATION

(11) **EP 3 452 539 B1**
(45) Date of publication and mention of the grant of the patent: **08.07.2020**
(21) Application number: 17723829.2
(22) Date of filing: 02.05.2017
(51) Int. Cl.: C08J 9/14

(54) **BLOWING AGENTS FOR FOAMING THERMOPLASTIC POLYMER COMPRISING POLYSTYRENE**
TREIBMITTEL ZUM AUFSCHÄUMEN VON THERMOPLASTISCHEM POLYMER MIT POLYSTYROL
AGENTS GONFLANTS POUR LE MOUSSAGE D'UN POLYMÈRE THERMOPLASTIQUE COMPRENANT DU POLYSTYRÈNE

(30) Priority: 06.05.2016 US 201662332612 P
(43) Date of publication of application: 13.03.2019
(73) Proprietor: The Chemours Company FC, LLC, Wilmington, DE 19801 (US)
(72) Inventor: CREAZZO, Joseph Anthony, Wilmington Delaware 19810 (US); ROBIN, Mark L., Middletown Delaware 19709 (US)
(74) Representative: Heinemann, Monica
(86) International application number: PCT/US2017/030623
(87) International publication number: WO 2017/192577

(56) References cited:
- EP-A1- 2 129 712
- EP-A1- 2 639 260
- WO-A2-2008/130749
- US-A1- 2010 087 555
- US-A1- 2010 179 236

## Description

### BACKGROUND INFORMATION

### Field of the Disclosure

This invention relates to the use of HFO-1234yf and E-HFO-1336mzz as the sole blowing agent for thermoplastic polymer comprising polystyrene.

### Description of the Related Art

U.S. patent 8,648,123 (assigned to Arkema, Inc.) discloses the necessity of the blowing agent being soluble in polystyrene in order to properly foam it. Table 1 in the patent disqualifies E-HFO-1336 (also known as E-HFO-1336mzz, E-1,1,1,4,4,4-hexafluoro-2-butene) as a blowing agent by reporting solubility of this compound in polystyrene not being detectible (col. 7, I. 18-23). Table 1 also discloses HFO-1234yf (2,3,3,3-tetrafluoropropene) as having moderate solubility, about one-half of that of the favored HFO-1243zf. Even this moderate solubility is not enough for successful foaming of polystyrene. Table 2 discloses Examples 30 and 31 representing two failed attempts at successful foaming of polystyrene using HFO-1234yf as the blowing agent. Details of these failures are as follows: "the foamed product had very small cell size, macrovoids, blowholes, high open cell content, and frequent periods of popping at the die caused by undissolved blowing agent" (paragraph bridging cols. 10 and 11).

US2010/0087555 discloses a process to prepare foamed polystyrene with a fluorinated alkene blowing agent.

### SUMMARY

The present invention involves the discovery of foaming conditions unavailable from U.S. Patent 8,648,123 that enable both HFO-1234yf and E-HFO-1336mzz to be useful as the sole blowing agent in foaming thermoplastic polymer comprising polystyrene and polystyrene itself, with the foamed product being free of the indicia of insoluble blowing agent, i.e. free of defects macrovoids and blowholes and the rough surface skin accompanying these defects.

One embodiment of the present invention is the process comprising extruding a molten composition comprising thermoplastic polymer comprising polystyrene and blowing agent comprising either HFO-1234yf (2,3,3,3-tetrafluoropropene) or E-HFO-1336mzz (E-1,1,1,4,4,4-hexafluoro-2-butene), wherein either said HFO-1234yf or said E-HFO-1336mzz are the sole blowing agent in said molten composition under the conditions:
(a) said composition being formed by melt mixing at a temperature of at least 180°C,
(b) said melt mixing being carried out under a pressure of at least 2500 psi (172 Bar),
(c) said extruding being carried out at a temperature of at least 120°C, and
(d) said extruding being carried out with a pressure of at least 1250 psi (86 Bar) and
obtaining as a result thereof a closed cell, smooth skin, low density foamed thermoplastic polymer comprising polystyrene.

These conditions are effective to produce this foamed product in the absence of any additional blowing agent in the practice of the present invention. The smooth skin indicates the absence of macrovoids and blowholes. Blowholes are macrovoids that have burst through the skin surface. The closed cells are uniform in size, indicating the absence of internal macrovoids. In the practice of the process of the present invention there is no popping during extrusion. The low density is preferably no greater than 65 kg/m³. These results are obtained by using either the HFO-1234yf or the E-HFO-1336mzz as the sole blowing agent in the molten composition.

In one embodiment, the thermoplastic polymer comprising polystyrene is preferably high in molecular weight as indicated by their exhibiting a melt flow rate (sometimes called MFR or MFI) of no greater than 25 g/10 min as determined in accordance with the procedure of ASTM D 1238 at 200°C using a 5 kg weight on the molten polymer.

Another embodiment comprises a foam product comprising: a polymer matrix comprising a thermoplastic material selected from the group consisting of polystyrene, polystyrene copolymers, blends of polystyrene with other thermoplastic polymers, defining a plurality of cells having an average cell size of from 0.02 to 5 mm, and a blowing agent comprising either HFO-1234yf (2,3,3,3-tetrafluoropropene) or E-HFO-1336mzz (E-1,1,1,4,4,4-hexafluoro-2-butene), having a density of less than 65 kg/m³, wherein the thermoplastic polymer has a melt flow rate of less than 25 g/ 10 min.

The combination of this preferred high molecular weight and the combination of conditions (a)-(d) enable the HFO-1234yf and E-HFO-1336mzz by themselves facilitate the effectiveness of these blowing agents to produce the above-described foamed product even when the molten composition is free of any additional blowing agent.

### DETAILED DESCRIPTION

The thermoplastic polymer being foamed according to the present invention comprises polystyrene.

The polystyrene can be styrene homopolymer or can contain copolymerized monomer other than styrene, i.e. polystyrene copolymer. The thermoplastic polymer can also be a blend of polystyrene with other thermoplastic polymers. The other thermoplastic polymer can also be a copolymer of styrene with monomer other than styrene. A preferred monomer other than styrene is acrylonitrile.

In one embodiment, whether the thermoplastic polymer being foamed is polystyrene or blends of polystyrene with other thermoplastic polymer, styrene is the dominant polymerized monomer (unit) in the thermoplastic polymer being foamed. In another embodiment, the polymerized units of styrene constitute at least 70 mol % or at least 80 mol% or at least 90 mol% or at least 100 mol% of the polymerized monomer units making up the thermoplastic polymer being foamed.

In another embodiment when the thermoplastic polymer contains styrene copolymer, the amount of other monomer copolymerized with the styrene, is such that the styrene content of the copolymer is at least 60 mol% of the copolymer. In yet another embodiment, the styrene content is at least 70 mol%. In yet another embodiment, the styrene content is at least 80 mol%. In yet another embodiment, the styrene content is at least 90 mol% of the copolymer, based on the total mols (100%) making up the copolymer. This applies whether the styrene copolymer is the only styrene-containing polymer in the thermoplastic polymer or is a blend with other thermoplastic polymer, such as styrene homopolymer or other styrene copolymer.

In another embodiment, the thermoplastic polymer being foamed is entirely polystyrene, notably the styrene homopolymer. When the thermoplastic polymer being foamed is a blend of polystyrene and other thermoplastic polymer as described above, the polystyrene component of this blend is preferably styrene homopolymer constituting at least 80 wt% of the combined weight of polystyrene and other thermoplastic polymer.

The molecular weight of the thermoplastic polymer comprising polystyrene being foamed is sufficiently high to provide the strength necessary for the requirements of the foam application. The strength requirement determines the minimum density of the foamed product. The high molecular weight of the thermoplastic polymer comprising polystyrene also contributes to the strength of the foamed product. An indicator of molecular weight is the rate at which the molten polymer flows through a defined orifice under a defined load. The lower the flow, the higher the molecular weight. Measurement of the melt flow rate is determined in accordance with ASTM D 1238 at 200°C and using a 5 kg weight on the molten polymer. The weight of molten polymer flowing through the orifice in a defined amount of time, enables the melt flow rate to be reported in g/10 min. In one embodiment, the melt flow rate of the thermoplastic polymer comprising polystyrene is no greater than 20 g/10 min. In another embodiment, the melt flow rate is no greater than 15 g/10 min. In yet another embodiment, the melt flow rate is no greater than 10 g/10 min. Surprisingly the higher the molecular weight (lower the melt flow rate), the better the foaming result, especially with respect to the attainability of low density foamed products, while still achieving smooth skin on the foamed product. Preferably the minimum melt flow rate for all the melt flow rates disclose herein is at least 1 g/10 min., whereby the melt flow rate ranges disclosed herein are 1 to 25, 1 to 20, 1 to 15, and 1 to 10, all values being g/10 min. These molecular weights apply to the thermoplastic polymer comprising polystyrene in the molten composition when the HFO-1234yf or E-HFO-1336mzz are the sole blowing agents in the composition.

The references to thermoplastic polymer comprising polystyrene also apply to polystyrene by itself. Thus, for example, the disclosure of thermoplastic polymer comprising polystyrene in the preceding paragraph can be replaced by the disclosure polystyrene.

The molten composition being foamed can contain additives other than the polymer being foamed and the HFO-1234yf or E-HFO-1336mzz blowing agent, such as nucleating agent, flame retardant, cell stabilizer agent, surfactant, preservative colorant, antioxidant, reinforcing agent, filler, antistatic agent, IR attenuating agent, extrusion aid, plasticizer, viscosity modifier, and other known additives, all in the amount to obtain the effect desired. The present invention is not limited to any particular additive, except as may be specified in any claim appended hereto.

Another embodiment of the invention is a foam product, comprising: a polymer matrix comprising a thermoplastic material selected from the group consisting of polystyrene, polystyrene copolymers, and blends of polystyrene with other thermoplastic polymers, defining a plurality of cells having an average cell size of from 0.02 to 5 mm, and a blowing agent comprising either HFO-1234yf (2,3,3,3-tetrafluoropropene) or E-HFO-1336mzz (E-1,1,1,4,4,4-hexafluoro-2-butene), having a density of less than 65 kg/m², wherein the thermoplastic polymer has a melt flow rate of less than 25 g/ 10 min.

Preferred examples of nucleating agent are talc and magnesium silicate.

A preferred example of flame retardant is tetrabromo-bis phenol A.

The molten composition is in effect the foamable composition. The amount of blowing agent in the molten composition will depend on the amount of additives other than blowing agent and the density desired in the foamed product. Generally, the amount of HFO-1234yf or E-HFO-1336mzz as the sole blowing agent will be 5 to 25 wt %, based on the weight of the molten composition.

The process of the present invention is carried out using an extruder to form the molten composition and to extrude it to form the foamed product. The steps (a)-(d) are practiced in and using an extruder. The thermoplastic polymer comprising polystyrene forms the feed to the extruder. The blowing agent(s) is (are) preferably fed into the extruder at a location intermediate to the feed and extrusion ends of the extruder, typically into the molten composition that is created as the extrusion screw advances the feeds to the extruder along its length. The other additives to the molten composition are added where convenient and as may be dictated by the state of the additive. For example, solid additives can be conveniently be added to the feed end of the extruder, possibly as a mixture with the polymer feed in particulate form to the extruder. The molten composition within the extruder is extruded through a die, thereby allowing the foamable composition to expand into a foamed product. The foamed product, which can be in such forms as sheet, plank, rod, or tube, is then cooled.

The present invention resides in certain conditions, unique to extrusion forming of thermoplastic polymers that include polystyrene, under which the extruder is operated.

In the region within the extruder where the composition is melted to form the molten composition, this melting occurring by the input of heat and the heat developed in the mixing process forming the melt, this is considered the melt mixing region. In one embodiment, the temperature in the melt mixing region is at least 185°C. In another embodiment, the temperature is at least 190°C. The preferred maximum temperature for all the melt mixing temperatures disclosed herein is 230°C. The melt mixing temperatures disclosed herein are the temperature of the melt in the mixing zone at the time of mixing. In one embodiment, the pressure under which the melt mixing is carried out is at least 3500 psi (241 Bar). In another embodiment, the pressure is at least 4000 psi (276 Bar). In yet another embodiment, the pressure is at least 4500 psi (310 Bar). In one embodiment, the maximum pressure under which the melt mixing is carried out is no greater than 5000 psi (345 Bar). The pressures disclosed herein are gauge pressures.

In the region within the extruder where the molten composition is extruded, the molten composition is cooled so that the temperature at which the extrusion is carried out is preferably at least 125°C, more preferably at least 130°C. The maximum temperature for all the minimum extrusion temperatures disclosed herein is preferably no greater than 140°C. The extrusion temperatures disclosed herein are the temperature of the melt at the time of extrusion.

In one embodiment, the extrusion is preferably carried out with a pressure of at least 1500 psi (103 Bar). In another embodiment, the pressure is at least 1600 psi (110 Bar). In one embodiment, the maximum pressure for all the extrusion pressure disclosed herein is no greater 2000 psi (138 Bar). The extrusion pressure is the pressure inside the extrusion die.

The disclosures of multiple ranges for melt flow rate, temperature and pressure above can be used in any combination in the practice of the present invention to obtain the particular foamed structure desired. For example, melt mixing pressures of 4000 to 5000 psi (276 to 345 Bar) are preferred for achieving low foam densities of the foamed product, and this temperature range can be used with any of the melt mixing and extrusion temperature ranges to form any of the smooth-skin, closed cell foam product densities disclosed herein. The same is true for the melt extrusion pressure range of 1500 to 2000 psi (103 to 138 Bar) pressure range together with the 3500 to 5000 psi (241 to 345 bar) pressure range for melt mixing. Most preferably, the two preferred pressure ranges, for melt mixing (241 to 345 Bar) and extrusion (103 to 138 bar) are used together. The melt flow rates for the polymer being foamed of no greater than 25, 20, 15, and 10, and as little as at least 1, all values being in g/10 min, can be used with any of these combinations of pressure and temperatures, depending on the foamed product result desired.

The conditions (a)-(d) can be used in any combination with any of the polymer melt flow rates and compositions and blowing agent compositions disclosed above.

Preferably the thermoplastic polymer comprising polystyrene and polystyrene itself exhibits the following foamed product attributes:
The foam will have a preponderance of closed cells. In one embodidment at least 80% of the cells will be closed. In another embodiment, at least 90% of the cells will be closed. In yet another embodiment, at least 95%. In yet another embodiment, at least 98% of the cells will be closed.

In one embodiment, the density of the foam is no greater than 65 g/m³. In another embodiment, the density of the foam is no greater than 50 g/m³. In yet another embodiment, the density of the foam is no greater than 40 kg/m³.

A smooth skin on the foam indicates the absence of macrovoids and blowholes.

The minimum required strength (compressive) of the foamed product will dictate that the density be at least 16 kg/m³.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The transitional phrase "consisting of" excludes any element, step, or ingredient not specified. If in the claim, such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of" or "consisting of."

### EXAMPLES

The following examples demonstrate the use of E-HFO-1336mzz and HFO-1234yf as blowing agents to produce polystyrene foam insulation exhibiting uniform closed cells, smooth skin, and low density. Macrovoids and blowholes are not present in the foam insulation. The polystyrene used in the Examples is styrene homopolymer available as Nova 1600 polystyrene having a melt flow rate of 6 g/10 min. A nucleating agent (nucleator), namely magnesium silicate, is present along with the polystyrene and blowing agent in the molten composition formed within the extruder.

### Example 1: E-HFO-1336mzz Blowing Agent

For this example, a 30 mm twin screw laboratory extruder was used with 8 individually controlled, electrically heated zones and water cooled barrels. Extrusion used a round die.

**Table 1 - Extruder Operating Parameters and Foam Density Achieved**

| | |
|---|---|
| Extruder speed (rpm) | 100 |
| Extrusion rate (lb/hr) | 20 (9.1 kg/hr) |
| Blowing agent rate (lb/hr) | 6 (2.7 kg/hr) |
| Blowing agent concentration (wt %) | 23 |
| Nucleator concentration (wt %) | 0.5 |
| Melt mixing temperature (°C) | 190 |
| Melt mixing pressure (psi) | 4000 (276 Bar) |
| Extrusion temperature (°C) | 135 |
| Extrusion pressure (psi) | 1800 (124 Bar) |
| Foam density (kg/m³) | 48 |

### Example 2: HFO-1234vf Blowing Agent

For this example, a 30 mm twin screw laboratory extruder was used with 8 individually controlled, electrically heated zones and water cooled barrels. Extrusion used a round die.

**Table 2 - Extruder Operating Parameters and Foam Density Achieved**

| | |
|---|---|
| Extruder speed (rpm) | 100 |
| Extrusion rate (lb/hr) | 20 (9.1 kg/hr) |
| Blowing agent rate (lb/hr) | 4 (1.8 kg/hr) |
| Blowing agent concentration (wt %) | 17 |
| Nucleator concentration (wt %) | 0.5 |
| Melt mixing temperature (°C) | 185 |
| Melt mixing pressure (psi) | 3500 (241 Bar) |
| Extrusion die temperature (°C) | 130 |
| Extrusion die pressure (psi) | 1500 (103 Bar) |
| Foam density (kg/m³) | 48 |

The foregoing results can also be obtained with a tandem extruder equipped with an extrusion slit die for production of insulation board foam, The tandem configuration employs a primary extruder and a secondary extruder, with secondary extruder having the slit die. The conditions (a)-(d) are observed in the operation of the secondary extruder.

## Claims

1. Process comprising extruding a molten composition comprising thermoplastic polymer comprising polystyrene and blowing agent comprising either HFO-1234yf (2,3,3,3-tetrafluoropropene) or E-HFO-1336mzz (E-1,1,1,4,4,4-hexafluoro-2-butene), wherein either said HFO-1234yf or said E- HFO-1336mzz are the sole blowing agent in said molten composition under the conditions
(a) said composition being formed by melt mixing at a temperature of at least 180°C,
(b) said melt mixing being carried out under a pressure of at least 2500 psi (172 Bar),
(c) said extruding being carried out at a temperature of at least 120°C, and
(d) said extruding being carried out under a pressure of at least 1250 psi (86 Bar), and
obtaining as a result thereof a closed cell, smooth skin, low density foamed thermoplastic polymer comprising polystyrene.

2. Process of claim 1 herein said thermoplastic polymer comprising polystyrene has a melt flow index of no greater than 25 g/10 min as determined in accordance with the procedure of ASTM D 1238 at 200°C using a 5 kg weight on the molten polymer.

3. Process of claim 1 wherein said low density is no greater than 65 kg/m3.

4. Process of claim 1 wherein said melt mixing temperature is at least 185°C.

5. Process of claim 1 wherein said melt mixing pressure is at least 3500 psi (241 Bar).

6. Process of claim 1 wherein said extruding is at a temperature of at least 120°C.

7. Process of claim 1 wherein said extruding is under a pressure of at least 1500 psi (103 Bar).

8. Process of claim 1 wherein said thermoplastic polymer comprising polystyrene is polystyrene.

9. Process of claim 1 wherein said thermoplastic polymer comprising polystyrene has at least 80% closed cells.

10. The process of claim 1 wherein said molten composition contains nucleating agent.

11. A foam product comprising: a polymer matrix comprising a thermoplastic material selected from the group consisting of polystyrene, polystyrene copolymers, and blends of polystyrene with other thermoplastic polymers, defining a plurality of cells, and a blowing agent wherein either HFO-1234yf (2,3,3,3-tetrafluoropropene) or E-HFO-1336mzz (E-1,1,1,4,4,4-hexafluoro-2-butene) are the sole blowing agents, having a density of less than 65 kg/m³, wherein the thermoplastic polymer has a melt flow rate of less than 25 g/ 10 min as determined in accordance with the procedure of ASTM D 1238 at 200°C using a 5 kg weight on the molten polymer.

12. The foam product composition of claim 11, where the thermoplastic polymer has a melt flow rate of less than 20 g/10 min, preferably a melt flow rate of less than 15 g/10 min, most preferably a melt flow rate of less than 10 g/10 min.

13. The foam product composition of claim 11, wherein the polystyrene copolymer is a copolymer of styrene and acrylonitrile.

14. The foam product composition of claim 11, wherein the blowing agent is HFO-1234yf (2,3,3,3-tetrafluoropropene) or wherein the blowing agent is E-HFO-1336mzz (E-1,1,1,4,4,4-hexafluoro-2-butene).

15. The foam product composition of claim 11, wherein said cells have an average cell size of from 0.02 to 5 mm.

## Patentansprüche

1. Verfahren umfassend Extrudieren einer geschmolzenen Zusammensetzung umfassend thermoplastisches Polymer umfassend Polystyrol und Treibmittel umfassend entweder HFO-1234yf (2,3,3,3-Tetrafluorpropen) oder E-HFO-1336mzz (E-1,1,1,4,4,4-Hexafluor-2-buten), wobei entweder das HFO-1234yf oder das E-HFO-1336mzz das einzige Treibmittel in der geschmolzenen Zusammensetzung unter den Bedingungen ist,
(a) dass die Zusammensetzung durch Schmelzmischen bei einer Temperatur von mindestens 180 °C gebildet wird,
(b) dass das Schmelzmischen unter einem Druck von mindestens 2500 psi (172 bar) ausgeführt wird,
(c) dass das Extrudieren bei einer Temperatur von mindestens 120 °C ausgeführt wird und
(d) dass das Extrudieren unter einem Druck von mindestens 1250 psi (86 bar) ausgeführt wird und
Erhalten, als Ergebnis davon, eines geschlossenenzelligen, geschäumten, thermoplastischen Polymers niederer Dichte und mit glatter Haut umfassend Polystyrol.

2. Verfahren nach Anspruch 1, wobei das thermoplastische Polymer, das Polystyrol umfasst, einen Schmelzflussindex von nicht mehr als 25 g/10 min, wie der Vorgehensweise von ASTM D 1238 entsprechend bei 200 °C unter Anwendung eines Gewichts von 5 kg an dem geschmolzenen Polymer bestimmt, aufweist.

3. Verfahren nach Anspruch 1, wobei die niedere Dichte nicht höher als 65 kg/m³ ist.

4. Verfahren nach Anspruch 1, wobei die Schmelzmischtemperatur mindestens 185 °C beträgt.

5. Verfahren nach Anspruch 1, wobei der Schmelzmischdruck mindestens 3500 psi (241 bar) beträgt.

6. Verfahren nach Anspruch 1, wobei das Extrudieren bei einer Temperatur von mindestens 120 °C stattfindet.

7. Verfahren nach Anspruch 1, wobei das Extrudieren unter einem Druck von mindestens 1500 psi (103 bar) stattfindet.

8. Verfahren nach Anspruch 1, wobei das thermoplastische Polymer, das Polystyrol umfasst, Polystyrol ist.

9. Verfahren nach Anspruch 1, wobei das thermoplastische Polymer, das Polystyrol umfasst, mindestens 80 % geschlossene Zellen aufweist.

10. Verfahren nach Anspruch 1, wobei die geschmolzene Zusammensetzung ein Keimbildungsmittel enthält.

11. Schaumstoffprodukt umfassend: eine Polymermatrix, die ein thermoplastisches Material umfasst ausgewählt aus der Gruppe bestehend aus Polystyrol, Polystyrolcopolymeren und Mischungen von Polystyrol mit anderen thermoplastischen Polymeren, die eine Mehrzahl von Zellen definieren, und ein Treibmittel, wobei entweder HFO-1234yf (2,3,3,3-Tetrafluorpropen) oder E-HFO-1336mzz (E-1,1,1,4,4,4-Hexafluor-2-buten) das einzige Treibmittel ist, das eine Dichte von weniger als von 65 kg/m³ aufweist, wobei das thermoplastische Polymer eine Schmelzflussrate von weniger als 25 g/10 min, wie der Vorgehensweise von ASTM D 1238 entsprechend bei 200 °C unter Anwendung eines Gewichts von 5 kg an dem geschmolzenen Polymer bestimmt, aufweist.

12. Schaumstoffproduktzusammensetzung nach Anspruch 11, wobei das thermoplastische Polymer eine Schmelzflussrate von weniger als 20 g/10 min, bevorzugt eine Schmelzflussrate von weniger als 15 g/10 min, am bevorzugtesten eine Schmelzflussrate von weniger als 10 g/10 min aufweist.

13. Schaumstoffproduktzusammensetzung nach Anspruch 11, wobei das Polystyrolcopolymer ein Copolymer von Styrol und Acrylnitril ist.

14. Schaumstoffproduktzusammensetzung nach Anspruch 11, wobei das Treibmittel HFO-1234yf (2,3,3,3-Tetrafluorpropen) ist oder wobei das Treibmittel E-HFO-1336mzz (E-1,1,1,4,4,4-Hexafluor-2-buten) ist.

15. Schaumstoffproduktzusammensetzung nach Anspruch 11, wobei die Zellen eine durchschnittliche Zellgröße von 0,02 bis 5 mm aufweisen.

## Revendications

1. Procédé comprenant l'extrusion d'une composition fondue comprenant le polymère thermoplastique comprenant du polystyrène et l'agent d'expansion comprenant soit HFO-1234yf(2,3,3,3-tétrafluoropropène) soit E-HFO-1336mzz(E-1,1,1,4,4,4-hexafluoro-2-butène), où soit ledit HFO-1234yf soit ledit E-HFO-1336mzz est l'unique agent d'expansion dans ladite composition fondue sous les conditions :
(a) ladite composition étant formée par mélange à l'état fondu à une température d'au moins 180°C,
(b) ledit mélange à l'état fondu étant conduit sous une pression d'au moins 2 500 psi (172 bars),
(c) ladite extrusion étant conduite à une température d'au moins 120°C, et
(d) ladite extrusion étant conduite sous une pression d'au moins 1 250 psi (86 bars), et
d'obtention en résultat de celles-ci d'un polymère thermoplastique expansé de basse densité, à peau lisse, à alvéoles fermées, comprenant du polystyrène.

2. Procédé selon la revendication 1 ci-inclus, ledit polymère thermoplastique comprenant du polystyrène ayant un indice de fusion à l'état fondu non supérieur à 25 g/10 min tel que déterminé selon la procédure de ASTM D 1238 à 200°C en utilisant un poids de 5 kg sur le polymère fondu.

3. Procédé selon la revendication 1, ladite basse densité n'étant pas supérieure à 65 kg/m³.

4. Procédé selon la revendication 1, ladite température de mélange à l'état fondu étant d'au moins 185°C.

5. Procédé selon la revendication 1, ladite pression de mélange à l'état fondu étant d'au moins 3 500 psi (241 bars).

6. Procédé selon la revendication 1, ladite extrusion s'effectuant à une température d'au moins 120°C.

7. Procédé selon la revendication 1, ladite extrusion s'effectuant sous une pression d'au moins 1 500 psi (103 bars).

8. Procédé selon la revendication 1, ledit polymère thermoplastique comprenant du polystyrène étant le polystyrène.

9. Procédé selon la revendication 1, ledit polymère thermoplastique comprenant du polystyrène ayant au moins 80 % d'alvéoles fermées.

10. Procédé selon la revendication 1, ladite composition fondue contenant un agent de nucléation.

11. Produit expansé comprenant: une matrice polymère comprenant un matériau thermoplastique sélectionné dans le groupe constitué du polystyrène, des copolymères de polystyrène, et des mélanges de polystyrènes avec d'autres polymères thermoplastiques, définissant une pluralité d'alvéoles, et un agent d'expansion, soit le HFO-1234yf(2,3,3,3-tétrafluoropropène) soit le E-HFO-1336mzz(E-1,1,1,4,4,4-hexafluoro-2-butène) étant l'unique agent d'expansion, ayant une densité inférieure à 65 kg/m³, le polymère thermoplastique ayant un débit d'écoulement à l'état fondu inférieur à 25 g/10 min tel que déterminé selon la procédure de ASTM D 1238 à 200°C en utilisant un poids de 5 kg sur le polymère fondu.

12. Composition de produit expansé selon la revendication 11, où le polymère thermoplastique présente un débit d'écoulement à l'état fondu inférieur à 20 g/10 min, préférablement un débit d'écoulement à l'état fondu inférieur à 15 g/10 min, de manière préférée entre toutes un débit d'écoulement à l'état fondu inférieur à 10 g/10 min.

13. Composition de produit expansé selon la revendication 11, le copolymère de polystyrène étant un copolymère de styrène et d'acrylonitrile.

14. Composition de produit expansé selon la revendication 11, l'agent d'expansion étant le HFO-1234yf(2,3,3,3-tétrafluoropropène) ou l'agent d'expansion étant le E-HFO-1336mzz(E-1,1,1,4,4,4-hexafluoro-2-butène).

15. Composition de produit expansé selon la revendication 11, lesdites alvéoles ayant une taille moyenne d'alvéole de 0,02 à 5 mm.
